# EUROPÄISCHE PATENTSCHRIFT

(11) **EP 1 056 960 B1**
(45) Veröffentlichungstag und Bekanntmachung des Hinweises auf die Patenterteilung: **27.11.2002**
(21) Anmeldenummer: 99911686.6
(22) Anmeldetag: 19.02.1999
(51) Int. Cl.: F16D 65/16

(54) **ELEKTROMECHANISCH BETÄTIGBARE SCHEIBENBREMSE**
ELECTROMAGNETICALLY ACTUATED DISK BRAKE
FREIN A DISQUE A COMMANDE ELECTROMAGNETIQUE

(30) Priorität: 20.02.1998 DE 19807328
(43) Veröffentlichungstag der Anmeldung: 06.12.2000
(73) Patentinhaber: LUCAS INDUSTRIES PUBLIC LIMITED COMPANY, Solihull B90 4LA (GB); Varity GmbH, 56070 Koblenz (DE)
(72) Erfinder: KÖTH, Boris, D-65817 Eppstein (DE); MOHR, Kurt, D-56283 Halsenbach (DE); OLIVERI, Salvatore, D-56341 Filsen (DE)
(74) Vertreter: Schmidt, Steffen J., Dipl.-Ing.
(86) Internationale Anmeldenummer: EP9901081
(87) Internationale Veröffentlichungsnummer: WO99042739

(56) Entgegenhaltungen:
- WO-A-98/34042
- DE-A- 19 511 287
- DE-A- 19 543 098
- US-A- 5 107 967

## Beschreibung

Die Erfindung betrifft eine elektromechanisch betätigbare Scheibenbremse nach dem Oberbegriff des Anspruchs 1. Eine solche Scheibenbremse ist aus US-A-5 107 967 bekannt.

Derartige Fahrzeugbremsenanordnungen insbesondere in der Form von Scheibenbremsen sind für sogenannte Brake-by-Wire-Systeme bekannt.

Diesen Anordnungen liegt die Problemstellung zugrunde, die Rotationsbewegung des Elektromotors in eine translatorische Bewegung der Bremsbeläge relativ zu der Bremsscheibe umzusetzen, wobei einerseits hohe Zustellkräfte und andererseits eine hohe Dynamik der Zustellbewegung gefordert ist. Darüber hinaus besteht die Anforderung nach einer hohen Zuverlässigkeit mit einem hohen mechanischen Wirkungsgrad innerhalb eines breiten Temperaturbetriebsbereiches, wie er bei Fahrzeugbremsen auftritt. Weiterhin ist die Forderung nach einer Selbstlösefähigkeit der Bremsbeläge von der Bremsscheibe bei Stromausfall des Elektromotors zu erfüllen. Des weiteren ist der begrenzte Bauraum am Fahrzeugrad effizient zu nutzen und die ungefederten Massen sind gering zu halten. Ein weiterer Gesichtspunkt beim Einsatz von Spindel/Mutter-Anordnungen zur Übertragung der Rotationsbewegung in eine Translationsbewegung ist, daß möglichst keine Querkräfte oder Biegemomente in das Spindelgetriebe eingeleitet werden, da die Spindeln in der Regel hierfür nicht ausgelegt und der Spindelwirkungsgrad dann deutlich verschlechtert wird.

Die Wahl der Spindelsteigung und des Spindeldurchmessers sind maßgeblich von der geforderten Spindelaxialkraft und dem verfügbaren Antriebsmoment an der Spindelmutter abhängig. Außerdem muß die von der Spindel bereitgestellte Axialkraft durch eine ausreichend dimensionierte Axiallagerung abgestützt werden.

Die DE 195 11 287 A1 zeigt eine Schwimmsattelbremse, bei der ein als Außenläufer ausgebildeter Elektromotor eine mit dem Läufer des Elektromotors starr gekoppelte Mutter antreibt. Über mit der Mutter in Eingriff befindliche Gewinderollen wird eine Gewindespindel in axialer Richtung verschoben, wenn der Elektromotor die Mutter und damit die Gewinderollen in Rotation versetzt. Die Gewindespindel wirkt auf einen Bremsbelag. Die Gewindespindel ist durch die Gewinderollen in dem Läufer des Elektromotors gelagert. Der Läufer des Elektromotors ist an seinem der Bremsbelag zugewandten Ende über ein sich am Gehäuse abstützendes Radiallager geführt.

Aus der DE 195 43 098 A1 ist eine Schwimmsattelbremse bekannt, bei der ein als Innenläufer ausgebildeter Elektromotor eine Gewindespindel antreibt. Die Spindel weist ein Außengewinde auf, welches mit Gewinderollen im Eingriff steht, die entlang des Umfangs der Spindel verteilt angeordnet sind. An der Peripherie der Rollen greift ein Innengewinde einer Gewindebüchse ein. Die Gewindebüchse ist mit einem Bremsbelag verbunden, so daß bei einer Rotation des Motors der Bremsbelag in axialer Richtung verschoben wird. Der Läufer des Elektromotors ist mit einer Hohlachse zur Aufnahme der Spindelstange versehen. An seiner Rückseite ist der Läufer mit einem Radiallager gegen das Gehäuse und mit einem Axiallager an der Spindelstange abgestützt.

Bei den beiden vorgenannten Anordnungen werden im Betrieb entweder Querkräfte vom Elektromotor auf die Kontaktstelle zwischen der Spindel und den Rollen ausgeübt, oder die Bremsbeläge erzeugen Rückwirkungskräfte auf die Kontaktstellen zwischen der Spindel und den Rollen. In beiden Fällen ist erhöhter Verschleiß und erhöhte Reibungskräfte zwischen den Berühungsstellen an der Spindel bzw. den Rollen die Folge. Dies hat zur Folge, daß die Fähigkeit zur Selbstlösung und die Präzision der Stellbewegung beeinträchtigt wird.

Aus der DE 196 05 988 A1 ist eine Schwimmsattelbremse bekannt, bei der ein Elektromotor mit einem innenliegenden Rotor eine Gewindespindel antreibt. Um mit einem kleinen Antriebsmotor auszukommen, ist der Rotor als Becher ausgeführt, in dessen Inneren die Gewindespindel angeordnet ist. Die Gewindespindel stützt sich lediglich mit einem Ende am Boden des Bechers ab, welcher durch eine axiale- und zwei radiale Lager am Gehäuse abgestützt ist. Entlang ihrer Längserstrekkung ist die Gewindespindel nicht weiter abgestützt, so daß das andere Ende der Gewindespindel frei ist. An der Gewindespindel liegen Planetenrollen an, mittels deren eine Drehbewegung der Gewindespindel in eine Axialverschiebung einer Mutter übertragen wird. Die Mutter stützt sich radial an der Innenseite des becherförmigen Rotors, bzw. dessen radialen Lagerungen ab. Da das zweite axiale Ende der Gewindespindel nicht radial gelagert ist, hat diese Anordnung den Nachteil, daß ein durch mechanische Belastung und Verschleiß bedingter Versatz des freien Endes der Gewindespindel eine exzentrische Drehbewegung zur Folge hat, so daß die Planetenrollen ungleichmäßig belastet und die Stellbewegung unpräzise wird.

Der Erfindung liegt die Aufgabe zugrunde, eine Fahrzeugbremse der eingangs genannten Art dahingehend zu verbessern, daß diese Nachteile behoben sind.

Die erfindungsgemäße Lösung sieht vor, daß die Spindel im Bereich ihrer beiden Enden drehbar gelagert ist.

Die im Stand der Technik vorgesehenen Lageranordnungen stellen für dieses Problem keine Lösung dar. Die erfindungsgemäße Ausgestaltung gleicht durch die axiale Gleitführung der Mutter auf diese wirkende Querkräfte von den Bremsbacken her aus, so daß keine Querkräfte auf die Rollen übertragen werden. Die zweifache Lagerung der Spindel bewirkt, daß vom Elektromotor kommende Querkräfte vom Gehäuse aufgenommen werden, ohne daß sie Verformungen der Spindel bewirken können.

In einer bevorzugten Ausführungsform der Erfindung steht die Spindel über Planetenrollen mit der Mutter in Antriebsverbindung.

Die Spindel ist im Bereich ihrer beiden Ende drehbar gelagert. Dabei ist vorzugsweise ein erstes Lager als Festlager und ein zweites Lager als Loslager gegenüber dem Gehäuse in axialer Richtung ausgestaltet. Dies erlaubt eine Kompensation von Kräften, welche ein axiale Auswandern der Spindel verursachen.

Die Mutter ist in einer Gleitbuchse oder direkt in dem Gehäuse gleitend geführt. Eine direkte Führung der Mutter in dem Gehäuse (ohne separate Gleitbuchse) verringert den Herstellungsaufwand.

Im Bereich des dem Bremsbelag zugewandten Endes der Spindel ist erfindungsgemäß ein Lagerschild vorgesehen, welches eine Lagerstelle für die Spindel und/oder eine Lagerstelle für die Mutter bildet. Das Lagerschild kann dabei entweder einstückig mit dem Gehäuse ausgeführt sein, oder als separat in eine entsprechende Öffnung in dem Gehäuse eingebrachtes Bauteil ausgeführt sein. Damit kann das Lagerschild eine doppelte Funktion einnehmen, wobei eine definierte Zuordnung der Lagerstelle für die Spindel und der Lagerstelle für die Mutter auf einfache Weise präzise herzustellen ist.

In einer besonders bevorzugten Ausführungsform weist die Mutter wenigstens einen Fortsatz auf, der durch eine entsprechend gestaltete Öffnung in dem Lagerschild hindurchreichen kann, um die Axialbewegung der Mutter durch das Lagerschild nach außen auf den Bremsbelag zu übertragen.

Vorzugsweise ist das zweite Lager für die Spindel (also das Loslager) in einer entsprechenden Ausnehmung in dem Lagerschild aufgenommen und durch zwischen den Öffnungen zwischen die Fortsätze der Mutter angeordneten Stegen gegen das Gehäuse abgestützt. Diese besonders bevorzugte Ausgestaltung erlaubt eine sehr kompakte und geschlossene Ausgestaltung der Anordnung.

Vorzugsweise sind der oder jeder Fortsatz der Mutter sowie die jeweils zugehörige Öffnung so gestaltet, daß die Mutter gegenüber dem Gehäuse gegen Verdrehen gesichert ist. Gegen den Bereich der Öffnungen ist damit die Mutter zusätzlich sowohl in axialer als auch in radialer Richtung geführt.

Um ein Eindringen von Staub oder Feuchtigkeit in das Innere des Gehäuses zu vermeiden, ist vorzugsweise zwischen dem Bremsbelag und dem oder den Fortsätzen der Mutter ein Zwischenelement angeordnet, das als Abschluß des/der Fortsätze der Mutter bzw. zur Aufnahme einer Abdichtung (z.B. in Gestalt eines Faltenbalges) dient.

In besonders bevorzugter Weise ist das bei dem Loslager aufgenommene Ende der Spindel durch eine Federanordnung in axialer Richtung gegen das Gehäuse vorgespannt. Damit können insbesondere durch Temperaturschwankungen bedingte Ausdehnungen der Spindel oder des Gehäuses, aber auch von anderen Bauteilen, kompensiert werden.

In einer weiteren Ausgestaltung ist die Spindel mit einem Federspeicher gekoppelt, der bei einer Zustellbewegung eine gegen diese Zustellbewegung gerichtete Arbeit aufnimmt, welche bei stromlosen Elektromotor eine Rückstellbewegung der Spindel bzw. der Mutter bewirkt. Auf diese Weise ist sichergestellt, daß der Bremsbelag von der Bremsscheibe freikommen kann.

Um eine besonders raumsparende Anordnung des Federspeichers zu erreichen, kann diese als in einer Längsbohrung der Spindel ausgeführter Torsionsstab ausgestaltet sein. Der Vorteil dieser Anordnung besteht darin, daß die Spindel/Mutter-Anordnung selbsthemmend ausgeführt sein kann, so daß eine Parkbremsfunktion realisierbar ist. Durch eine gesteuerte Aufladung bzw. Endladung des Federspeichers kann auch bei nichtfunktionsfähigem Elektromotor die Spindel entgegen der Zustellbewegung durch den Federspeicher in Rotation versetzt werden, so daß die Bremsscheibe und der Bremsbelag voneinander freikommen.

Bevorzugt ist der Federspeicher im Bezug auf die Spindel, den Motor und das Gehäuse derart angeordnet, daß mittels einer mit dem Federspeicher gekoppelten Kupplung der Lade-/Entladevorgang des Federspeichers steuerbar ist.

Besonders bevorzugt weist die Scheibenbremse einen Schwimmsattel auf, der zwei Bremsbeläge trägt, zwischen denen die Bremsscheibe angeordnet ist. Der Schwimmsattel ist derart ausgebildet, daß er bei einer Zustellbewegung eine gegen diese Zustellbewegung gerichtete Arbeit aufnimmt, welche bei stromlosem Elektromotor eine Rückstellbewegung der Spindel bzw. der Mutter bewirkt, so daß der Bremsbelag von der Bremsscheibe freikommt. Diese Ausgestaltung ermöglicht es, auf einen besonderen Federspeicher zu verzichten und gestaltet eine besonders einfache Bauweise der Scheibenbremse.

In einer weiteren Ausführungsform ist zusätzlich zu der Rollen/Spindel- bzw. der Mutter/Spindel-(Getriebe)Anordnung eine weitere Getriebestufe vorzugsweise in Form eines Planetengetriebes vorgesehen.

Weitere Merkmale, Eigenschaften und Abwandlungsmöglichkeiten werden anhand der Beschreibung dreier Ausführungsbeispiele unter Bezugnahme auf die beigefügten Zeichnungen erläutert.
- Fig. 1: zeigt eine erste Ausführungsform einer erfindungsgemäßen elektromechanisch betätigbaren Scheibenbremse in einer schematischen Längsschnittdarstellung.
- Fig. 2: zeigt eine Schnittdarstellung durch die elektromechanisch betätigbare Scheibenbremse gemäß Fig. 1 längs der Schnittlinien A-A.
- Fig. 3: zeigt eine zweite Ausführungsform einer erfindungsgemäßen elektromechanisch betätigbaren Scheibenbremse in einer Längsschnittdarstellung.
- Fig. 4: zeigt eine dritte Ausführungsform einer erfindungsgemäßen elektromechanisch betätigbaren Scheibenbremse in einer Längsschnittdarstellung.
- Fig. 5: zeigt eine Schnittdarstellung durch die elektromechanisch betätigbare Scheibenbremse gemäß Fig. 4 längs der Schnittlinien B-B.

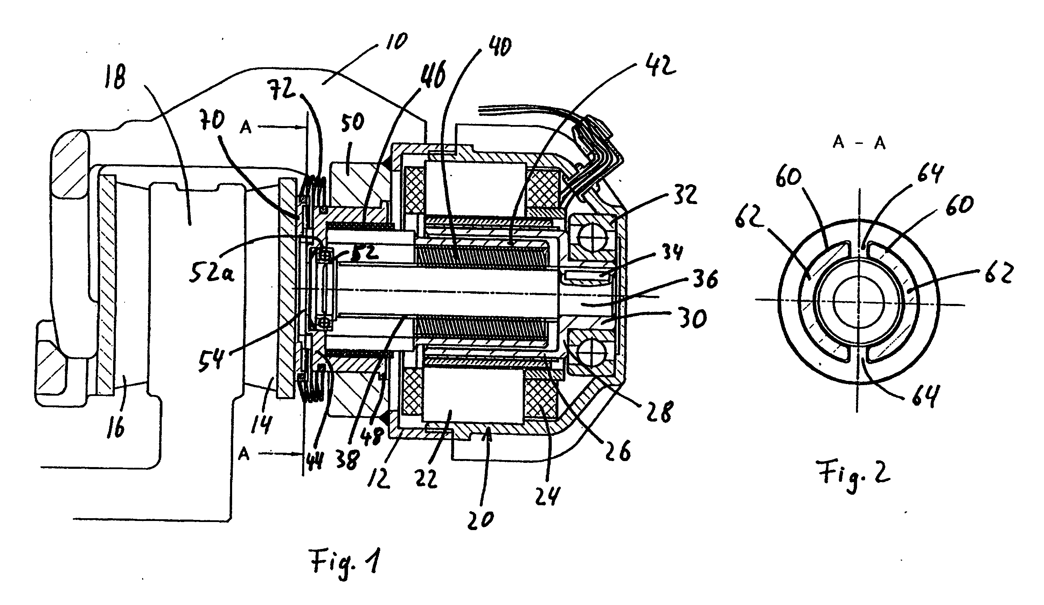

Die in Fig. 1 schematisch veranschaulichte elektromechanisch betätigbare Scheibenbremse ist als Schwimmsattelbremse mit einem Schwimmsattel 10 ausgestaltet, der mit einem Gehäuse 12 fest verbunden ist. In dem Schwimmsattel 10 sind zwei Bremsbeläge 14, 16 aufgenommen, zwischen denen eine lediglich teilweise schematisch angedeutete Bremsscheibe 18 angeordnet ist.

In dem Gehäuse 12 ist ein Innenläufermotor 20 aufgenommen. Dabei ist ein aus Eisenblechen aufgebauter Stator 22 mit einer entsprechenden Statorwicklung 24 in das Gehäuse eingepreßt. Ein Rotor 26 des Elektromotors 20 weist an seinem dem Bremsbelag 14 abgewandten Ende eine Stufe 28 auf, die einen Bund 30 trägt. Der Bund 30 ist in ein Kugellager 32 eingepaßt, das in einer entsprechenden Ausnehmung in dem Gehäuse 12 aufgenommen ist. Mittels einer als Verdrehsicherung wirkenden Paßfeder 34 ist ein erstes Ende einer Gewindespindel 36 in dem Bund 30 des Rotors 28 verdrehgesichert aufgenommen. Dieses erste Ende der Gewindespindel 36 ist somit ebenfalls durch das Kugellager 32 gegen das Gehäuse abgestützt. Da dieses erste Ende der Gewindespindel 36 in die Stufe 30 des Rotors 26 fest eingepreßt ist, wird hierdurch ein Festlager für die Gewindespindel 36 gebildet. Die Gewindespindel 36 weist ein Außengewinde 38 auf, das mit mehreren (drei oder mehr) zylindrischen Gewinderollen 40 im Eingriff steht.

Die mit der Gewindespindel 36 kämmenden Gewinderollen 40 sind in radialer Richtung so dimensioniert, daß sie mit einer Mutter 42, die die Form einer hohlzylindrischen Innengewindebüchse aufweist, ebenfalls im Eingriff stehen. Die Mutter 42 erstreckt sich koaxial zu der Gewindespindel 36 bis zu einem Lagerschild 44, welches das Gehäuse abschließt. Das Lagerschild 44 ist becherförmig ausgestaltet und trägt an seiner zylindrischen Innenwand eine Gleitbuchse 46 als radiale Führung für die Mutter 42. Das Lagerschild 44 weist an seinem offenen Ende einen nach außen gerichteten Bund 48 auf, der in eine entsprechende Vertiefung in dem Deckel 50 des Gehäuses 12 aufgenommen ist. Der Bund 48 verhindert somit ein Auswandern des Lagerschildes 44 in axialer Richtung.

Das Lagerschild 44 weist eine mit der Gewindespindel 46 fluchtende Vertiefung auf, in der ein zweites Kugellager 52 aufgenommen ist. Das Kugellager 52 ist durch eine Tellerfeder 54 in den Boden der Ausnehmung in der Weise abgestützt, daß die Tellerfeder 54 am äußeren Ring 52a des Kugellagers 52 angreift. Das Kugellager 52 ist in der Öffnung des Lagerschildes 54 spielfrei axial verschieblich aufgenommen, so daß das Kugellager 52 bzw. das Lagerschild 44 ein Loslager für die Gewindespindel 36 bildet.

In radialer Richtung weiter außen als der äußere Umfang des Kugellagers 52 weist das Lagerschild 44 halbkreisringförmige Öffnungen 60 auf (siehe Fig. 2), durch die gegengleich gestaltete Fortsätze 62 der Mutter 40 reichen. Bei einer Betätigung des Elektromotors 20 wird durch die Drehbewegung der Gewindespindel 36 bzw. der Gewinderollen 40 die Mutter 42 in eine Längsbewegung versetzt, durch die die Fortsätze 62 in den Öffnungen 60 - je nach Drehrichtung des Elektromotors 20 - heraus- oder hineinfahren. Zwischen den Öffnungen 60 sind Stege 64 angeordnet, durch die ein Verdrehen der Mutter 42 bzw. deren Fortsätze 62 verhindert wird. Mit ihrem freien Ende greifen die Fortsätze 62 in entsprechend gestaltete Ausnehmungen in einem plattenförmig gestalteten Zwischenelement 70 ein, das als Abschluß der Fortsätze 62 der Mutter 40 dient. Darüber hinaus dient das Zwischenelement 70 der Aufnahme eines rohrförmigen Faltenbalges 72, dessen eines Ende an dem Zwischenelement 70 und dessen anderes Ende an der Außenseite des Lagerschildes 44 aufgenommen ist. Durch das Zwischenelement 70, welches die Fortsätze 62 in entsprechend gestalteten Ausnehmungen aufnimmt, wird verhindert, daß bei einer axialen Belastung der Mutter 40 die Fortsätze 62 seitlich ausknicken.

Das Zwischenelement 70 wirkt flächig auf den Bremsbelag 14, so daß bei einer Betätigung des Elektromotors im Sinne eines Zustellens der Scheibenbremse der Bremsbelag 14 gegen die Bremsscheibe 18 gedrängt wird. Bei der Zustellbewegung der Mutter 40 wird dabei auch die Bremsscheibe gegen den zweiten Bremsbelag 16 gedrängt. Der Schwimmsattel 10 nimmt diese Arbeit auf und schließt den Kraftfluß zum Gehäuse 12. Der Schwimmsattel 40 kann so gestaltet sein, daß er eine gewisse Elastizität aufweist und bei einer Zustellbewegung eine gegen diese Zustellbewegung gerichtete Arbeit in einer elastischen Verformung speichert, bis der Elektromotor 20 stromlos wird. Dann wird diese Arbeit frei und drängt über die Bremsscheibe 18 und den Bremsbelag 14 die Spindel bzw. Mutter in eine Rückstellbewegung. Dabei kann die Haltekraft einer selbsthemmenden Spindel/Mutter-Anordnung überwunden werden, so daß der Bremsbelag 14 von der Bremsscheibe 18 freikommt.

Durch die Tellerfeder 54 ist das Lager 52 und damit auch die Gewindespindel 36 in axialer Richtung in dem Gehäuse federnd eingespannt, so daß zwischen der Gewindespindel 36 und den Gewinderollen 40 bzw. den Gewinderollen 40 und der Mutter 42 kein nennenswertes Spiel auftreten kann.

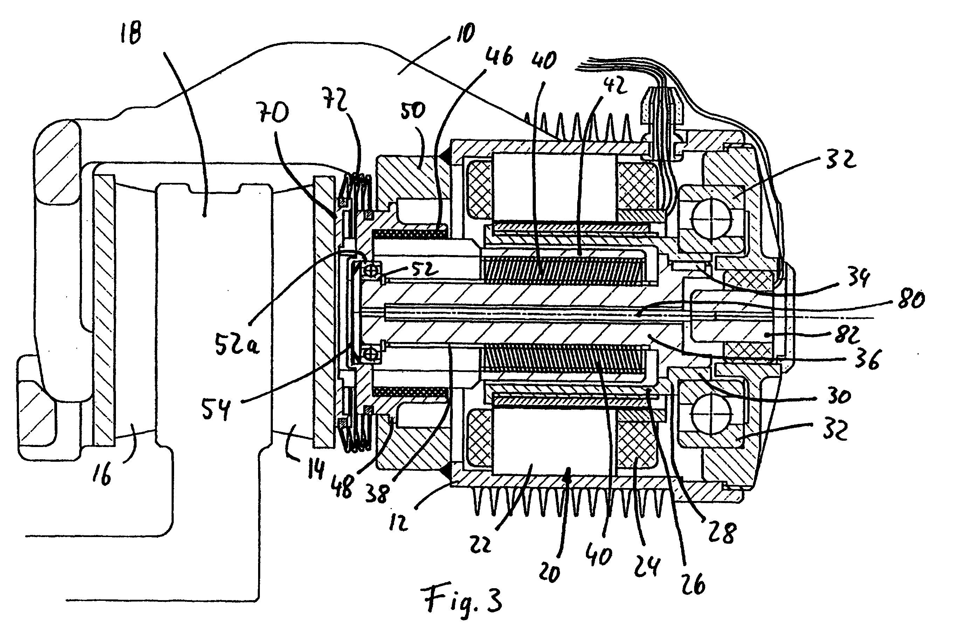

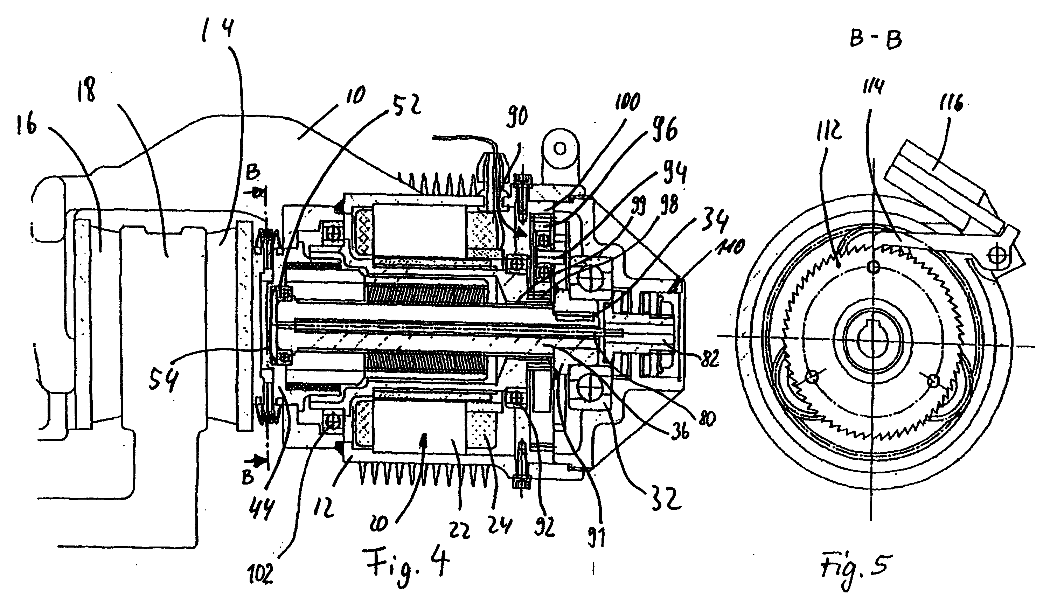

In Fig. 3 sind gegenüber Fig. 1 oder Fig. 2 gleiche oder gleichwirkende Teile mit den identischen Bezugszeichen wie in Fig. 1 bzw. Fig. 2 versehen und werden nachstehend nicht nochmals im Detail erläutert. Gleiches gilt für die weiter unten erläuterten Fig. 4 und Fig. 5.

Der Hauptunterschied zwischen der Ausführungsform aus Fig. 1 und der Ausführungsform in Fig. 3 besteht darin, daß die Gewindespindel 36 mit einem Federspeicher in Gestalt einer Torsionsfeder 80 gekoppelt ist, der bei einer Zustellbewegung der Mutter 40 eine gegen diese Zustellbewegung gerichtete Kraft aufnimmt. Bei einem stromlosen Elektromotor (20) bewirkt ein aufgeladener Federspeicher 80 eine gegen die Zustellbewegung gerichtete Rückstellbewegung der Spindel bzw. der Mutter. Damit kann der Bremsbelag von der Bremsscheibe freikommen, insbesondere dann, wenn eine selbsthemmende Spindel/Mutter-Anordnung eingesetzt wird. Die Torsionsfeder 80 ist aus Platzgründen im Inneren der Gewindespindel 36 angeordnet. Dazu ist die Torsionsfeder 80 an ihrem einen Ende (im Bereich des Loslagers 52) gegen Verdrehen gesichert in einer Bohrung aufgenommen. Das andere Ende der Torsionsfeder 80 (im Bereich des Kugellagers 32) ragt stirnseitig aus der Gewindespindel 36 heraus. Das aus der Gewindespindel 36 herausragende Ende der Torsionsfeder 80 ist in einer Kupplung 82 aufgenommen, die elektrisch betätigbar ist um die Torsionsfeder 80 gesteuert gegenüber dem Gehäuse 12 zu verspannen oder freizugeben, wobei das von der Torsionsfeder 80 aufgebrachte Drehmoment begrenzt wird.

Bei Verwendung einer selbsthemmenden Spindel/Mutter-Anordnung zusammen mit einem nichtelastischen Schwimmsattel läßt sich auch eine Parkbremsfunktion realisieren. Hierzu wird die Torsionsfeder 80 von der elektrisch betätigbaren Kupplung 82 gegenüber dem Gehäuse 12 freigeben, so daß keine gegen die Zustellbewegung gerichtete Rückstellbewegung der Gewindespindel 36 bzw. der Mutter 42 erfolgen kann, wodurch nach Betätigung zum Parken der Bremsbelag 14 (,16) mit der Bremsscheibe 18 in Reibschluß verbleibt. Demgegenüber wird zur Realisierung der Betriebsbremsfunktion die Torsionsfeder 80 von der elektrisch betätigbaren Kupplung 82 gegenüber dem Gehäuse 12 verspannt, so daß bei einer Rotation der Gewindespindel 36 die Torsionsfeder verdreht wird und damit eine gegen die Zustellbewegung gerichtete Arbeit aufgebracht wird. Diese Arbeit wird bei stromlosem Elektromotor eine Rückstellbewegung auf die Spindel bzw. Mutter ausüben, so daß der Bremsbelag von der Bremsscheibe freikommen kann.

Die Ausführungsform gemäß Fig. 4 unterscheidet sich von der Ausführungsform gemäß Fig. 1 insofern, als eine zweite Getriebestufe in Form eines Planetengetriebes 90 vorgesehen ist. Dazu ist der mittels eines Kugellagers 32 im Gehäuse 12 gelagerte Planetenträger 91 mit mehreren Öffnungen versehen, in denen Lagerzapfen 94 für Planetenräder 96 aufgenommen sind. Die Planetenräder kämmen mit einem Zahnkranz 100 mit Innenverzahnung. Im Bereich des von dem Bremsbelag 14 abliegenden Ende der Gewindespindel 36 ist der Planetenträger 91 mittels einer Verdrehsicherung 34 drehfest verbunden. Im Bereich des vom Bremsbelag 14 abliegenden Ende bildet der Rotor 26 ein Sonnenrad 98. Ein zusätzliches Kugellager 102 bildet ein Loslager für den Rotor 26, während das Kugellager 92 ein Festlager für den Rotor 26 bildet. Durch die zweistufige Ausführung des Getriebes sind höhere Zustellkräfte erzielbar. Darüber hinaus kann die Spindel/Mutter-Anordnung durch eine entsprechend gewählte Gewindesteigung selbstlösend ausgebildet sein.

Bei der Fig. 4 handelt es sich um eine dritte Ausführungsform, die wie die in Fig. 3 dargestellte Ausführungsform die Gewindespindel 36 mit einem Federspeicher in Gestalt einer Torsionsfeder 80 gekoppelt hat. Allerdings ist das stirnseitig aus der Gewindespindel 36 herausragende Ende der Torsionsfeder 80 in einem Drehmomentbegrenzer 110 aufgenommen, der rein mechanisch funktioniert. Sobald die Torsionsfeder 80 nach einer bestimmten Anzahl von Umdrehungen bzw. einem bestimmten Anteil einer Umdrehung in Zustellrichtung das für die gegen die Zustellbewegungen gerichtete Rückstellbewegung erforderliche Moment erreicht hat, wird dieses Moment von dem Drehmomentbegrenzer 110 nahezu konstant gehalten.

Weiterhin ist die weitere Ausführungsform für die Parkbremsfunktion eingerichtet. Dazu ist, wie aus der Schnittdarstellung entlang der Schnittlinie B-B in Fig. 5 hervorgeht, ein mit der Gewindespindel 36 drehfest verbundener (Säge)Zahnkranz 112 vorgesehen, der über die Achsen der Planetenräder 96 der zweiten Getriebestufe elektromotorseitig angetrieben ist. Der mit der Gewindespindel 36 drehfest verbundene (Säge)Zahnkranz 112 ist mittels einer Sperrklinke 114 arretierbar, wobei die Sperrklinke 114 elektrisch betätigbar ist. Zum Parken wird nun die Bremse betätigt, was unter anderem wie bei der Betriebsbremse üblich über das Bremspedal geschehen kann, bis die notwendige Zuspannkraft erreicht ist. Anschließend wird die Sperrklinke 114 betätigt, wodurch der (Säge)Zahnkranz 112 arretiert wird, so daß eine Rückstellbewegung ausgeschlossen wird, und folglich der Bremsbelag 14 mit der Bremsscheibe 18 in Reibschluß verbleibt. Im Unterschied zu der in Fig. 3 dargestellten Ausführungsform muß hierbei die Spindel/Mutter-Anordnung also nicht notwendigerweise selbsthemmend ausgeführt werden, um die Parkbremsfunktion zu ermöglichen.

Besonders vorteilhaft ist, wenn zur Betätigung der Sperrklinke 114 ein "bistabiler" (elektrotechnischer, elektromagnetischer) Umschalter 116 eingesetzt wird, der nur zum Umschalten bestromt zu werden braucht, beispielsweise mit einem impulsförmigen Strom, und nach dem Umschalten stromlos in seiner zuletzt eingenommenen Stellung verharrt. Selbiges gilt für die Ausführung der elektrisch betätigbaren Kupplung gemäß Fig. 3.

Obwohl die vier Ausführungsformen vorstehend getrennt voneinander beschrieben sind, versteht sich für einen Fachmann, daß einzelne Aspekte einer Ausführungsform auch in die jeweils anderen beiden Ausführungsformen übertragen werden können ohne dabei den Erfindungsgedanken zu verlassen.

## Patentansprüche

1. Elektromechanisch betätigbare Scheibenbremse mit
- einem Gehäuse (12),
- einem Bremsbelag, auf den ein elektrisch betätigbarer Aktuator wirkt, wobei
- der Aktuator einen Elektromotor (20) und eine Spindel/Mutter-Getriebeanordnung aufweist,
- der Elektromotor (20) als Innenläufermotor mit einem Stator (22) und einem Rotor (26) ausgebildet ist, dessen Rotor (26) mit der Spindel (36) drehfest gekoppelt ist,
- die Spindel (36) getrieblich mit der Mutter (42) gekoppelt ist, um eine Rotationsbewegung der Spindel (36) in eine translatorische Bewegung der Mutter (42) umzusetzen,
- die Spindel (36) entlang ihrer Längserstreckung an wenigstens zwei Stellen drehbar gegenüber dem Gehäuse (12) radial gelagert ist, und
- die Mutter (42) gegenüber dem Gehäuse (12) axial gleitend geführt ist,
**dadurch gekennzeichnet, daß**
- die Spindel (36) im Bereich ihrer beiden Enden drehbar gelagert ist.

2. Elektromechanisch betätigbare Scheibenbremse nach Anspruch 1,
**dadurch gekennzeichnet, daß**
- die Spindel (36) über Planetenrollen mit der Mutter (42) in Antriebsverbindung steht.

3. Elektromechanisch betätigbare Scheibenbremse nach Anspruch 1 oder 2,
**dadurch gekennzeichnet, daß**
- ein erstes Lager als Festlager und ein zweites Lager als Loslager gegenüber dem Gehäuse (12) in axialer Richtung ausgestaltet ist.

4. Elektromechanisch betätigbare Scheibenbremse nach Anspruch 1, 2 oder 3,
**dadurch gekennzeichnet, daß**
- die Mutter (42) in einer Gleitbuchse oder direkt in dem Gehäuse (12) gleitend geführt ist.

5. Elektromechanisch betätigbare Scheibenbremse nach Anspruch 1, 2, 3 oder 4,
**dadurch gekennzeichnet, daß**
- ein Lagerschild im Bereich des Endes der Spindel (36) vorgesehen ist, welches dem Bremsbelag zugewandt ist, um eine Lagerstelle für die Spindel (36) und/oder eine Lagerstelle für die Mutter (42) zu bilden.

6. Elektromechanisch betätigbare Scheibenbremse nach Anspruch 5,
**dadurch gekennzeichnet, daß**
- die Mutter (42) wenigstens einen Fortsatz aufweist, der durch eine entsprechend gestaltete Öffnung in dem Lagerschild reicht und auf den Bremsbelag wirkt.

7. Elektromechanisch betätigbare Scheibenbremse nach Anspruch 5 oder 6,
**dadurch gekennzeichnet, daß**
- das zweite Lager für die Spindel (36) an dem Lagerschild aufgenommen ist und durch zwischen den Öffnungen für die Fortsätze angeordneten Stegen gegen das Gehäuse (12) abgestützt ist.

8. Elektromechanisch betätigbare Scheibenbremse nach Anspruch 6 oder 7,
**dadurch gekennzeichnet, daß**
- der oder jeder Fortsatz sowie die jeweilige Öffnung so gestaltet sind, daß die Mutter (42) gegenüber dem Gehäuse (12) gegen Verdrehen gesichert ist.

9. Elektromechanisch betätigbare Scheibenbremse nach einem der Ansprüche 1 bis 8,
**dadurch gekennzeichnet, daß**
- zwischen dem Bremsbelag und dem Fortsatz/den Fortsätzen der Mutter (42) ein Zwischenelement angeordnet ist, das als Abschluß des Fortsatzes/der Fortsätze der Mutter (42) und/oder zur Aufnahme einer Abdichtung dient.

10. Elektromechanisch betätigbare Scheibenbremse nach Anspruch 3, **dadurch gekennzeichnet, daß**
- das bei dem Loslager aufgenommene Ende der Spindel (36) durch eine Federanordnung in axialer Richtung gegen das Gehäuse (12) vorgespannt ist.

11. Elektromechanisch betätigbare Scheibenbremse nach einem der Ansprüche 1 bis 10,
**dadurch gekennzeichnet, daß**
- die Spindel (36) mit einem Federspeicher (80) gekoppelt ist, der bei einer Zustellbewegung eine gegen diese Zustellbewegung gerichtete Arbeit aufnimmt, welche bei stromlosem Elektromotor (20) eine Rückstellbewegung der Spindel (36) bzw. der Mutter (42) bewirkt, so daß der Bremsbelag von einer Bremsscheibe (18) freikommen kann.

12. Elektromechanisch betätigbare Scheibenbremse nach Anspruch 11,
**dadurch gekennzeichnet, daß**
- der Federspeicher im Bezug auf die Spindel (36), den Motor und das Gehäuse (12) derart angeordnet ist, daß mittels einer mit dem Federspeicher gekoppelten Kupplung der Lade-/Entladevorgang des Federspeichers steuerbar ist.

13. Elektromechanisch betätigbare Scheibenbremse nach Anspruch 11 oder 12,
**dadurch gekennzeichnet, daß**
- der Federspeicher durch eine Torsionsfeder (80) gebildet ist, welche in einem Hohlraum im Inneren der Spindel (36) angeordnet ist.

14. Elektromechanisch betätigbare Scheibenbremse nach Anspruch 1 bis 10,
**dadurch gekennzeichnet, daß**
- ein Schwimmsattel (10) zwei Bremsbeläge (14, 16) trägt, zwischen denen eine Bremsscheibe (18) angeordnet ist, wobei der Schwimmsattel derart ausgebildet ist, daß er bei einer Zustellbewegung eine gegen diese Zustellbewegung gerichtete Arbeit als potentielle Energie speichert, welche bei stromlosem Elektromotor (20) als freizusetzende kinetische Energie eine Rückstellbewegung der Spindel (36) bzw. der Mutter (42) bewirkt, so daß der Bremsbelag von der Bremsscheibe (18) freikommt.

15. Elektromechanisch betätigbare Scheibenbremse nach einem der vorhergehenden Ansprüche,
**dadurch gekennzeichnet, daß**
- zusätzlich zu der Rollen/Spindel-Getriebeanordnung eine weitere Getriebestufe vorzugsweise in Form eines Planetengetriebes vorgesehen ist.

16. Elektromechanisch betätigbare Scheibenbremse nach Anspruch 13,
**dadurch gekennzeichnet, daß**
- die Torsionsfeder (80) an einem aus der Spindel (36) herausragenden Ende mit einem Drehmomentbegrenzer (110) getrieblich verbunden ist, so daß nach einer vorbestimmten Torsionsbewegung der Torsionsfeder (80) in Zustellrichtung der Fahrzeugbremse das für eine gegen die Zustellbewegung gerichtete Rückstellbewegung erforderliche Drehmoment erreicht und konstant gehalten werden kann.

17. Elektromechanisch betätigbare Scheibenbremse nach einem der vorhergehenden Ansprüche,
**dadurch gekennzeichnet, daß**
- die Spindel (36) mit einem Zahnkranz (112) drehfest verbunden ist, der mittels Lagerzapfen (94) von Planetenrädern (96) in Rotationsbewegung versetzbar ist und mittels einer Sperrklinke (114) arretierbar ist.

18. Elektromechanisch betätigbare Scheibenbremse nach Anspruch 17,
**dadurch gekennzeichnet, daß**
- die Sperrklinke (114) mittels eines bistabilen Stromstoßmagneten (116) betätigbar ist, der nur zum Umschalten mit Strom zu beschicken ist.

## Claims

1. An electromechanically actuatable disk brake comprising
- a housing (12),
- a friction pad against which an electrically actuatable actuator acts, wherein
- the actuator comprises an electric motor (20) and a spindle/nut transmission arrangement,
- the electric motor (20) is configured as an internal rotor motor having a stator (22) and a rotor (26), the rotor (26) of which is non-rotably coupled with a spindle (36),
- the spindle (36) is operatively coupled with the nut (42) in order to transform a rotational movement of the spindle (36) into a translatory movement of the nut (42),
- the spindle (36) is radially supported along its longitudinal extent in at least two places so as to be rotatable relative to the housing (12), and
- the nut (42) is guided axially slidable relative to the housing (12),
**characterised in that**
- the spindle (36) is rotatably supported in the area of its two ends.

2. The electromechanically actuatable disk brake according to Claim 1,
**characterised in that**
- the spindle (36) is operatively connected with the nut (42) via planetary rollers.

3. The electromechanically actuatable disk brake according to Claim 1 or 2,
**characterised in that**
- a first bearing is designed as a locating bearing and a second bearing is designed as a floating bearing relative to the housing (12) in the axial direction.

4. The electromechanically actuatable disk brake according to Claim 1, 2, or 3,
**characterised in that**
- the nut (42) is slidably guided in a sliding bushing or directly in the housing (12).

5. The electromechanically actuatable disk brake according to Claim 1, 2, 3, or 4,
**characterised in that**
- a bearing shield is provided in the area of the end of the spindle (36) which faces the friction pad, in order to provide a bearing position for the spindle (36) and/or a bearing position for the nut (42).

6. The electromechanically actuatable disk brake according to Claim 5,
**characterised in that**
- the nut (42) comprises at least one extension which extends through an appropriately shaped opening in the bearing shield and acts upon the friction pad.

7. The electromechanically actuatable disk brake according to Claim 5 or 6,
**characterised in that**
- the second bearing for the spindle (3) is accommodated at the bearing shield and bears against the housing (12) via webs arranged between the openings for the extensions.

8. The electromechanically actuatable disk brake according to Claim 6 or 7,
**characterised in that**
- the extension or each extension as well as the respective opening are designed in such a manner that the nut (42) is secured against rotation relative to the housing (12).

9. The electromechanically actuatable disk brake according to one of Claims 1 to 8,
**characterised in that**
- an intermediate element is arranged between the friction pad and the extension/the extensions of the nut (42), which serves as an end piece of the extension/the extensions of the nut (42) and/or for accommodating a seal.

10. The electromechanically actuatable disk brake according to Claim 3, **characterised in that**
- the end of the spindle (36) which is accommodated at the floating bearing is biased by a spring arrangement in the axial direction against the housing (12).

11. The electromechanically actuatable disk brake according to one of Claims 1 to 10,
**characterised in that**
- the spindle (36) is coupled with a spring-loaded cylinder (80) which upon a feed motion takes up work directed against said feed motion, which with the electric motor (20) being currentless causes a resetting movement of the spindle (36) or the nut (42), respectively, so that the friction pad can clear a brake disk (18).

12. The electromechanically actuatable disk brake according to Claim 11,
**characterised in that**
- the spring-loaded cylinder is arranged relative to the spindle (36), the motor, and the housing (12) in such a manner that a charging/discharging process of the spring-loaded cylinder can be controlled by means of a coupling which is coupled with the spring-loaded cylinder.

13. The electromechanically actuatable disk brake according to Claim 11 or 12,
**characterised in that**
- the spring-loaded cylinder is embodied by a torsion spring (80) arranged in a hollow space in the interior of the spindle (36).

14. The electromechanically actuatable disk brake according to Claims 1 to 10,
**characterised in that**
- a floating caliper (10) carries two friction pads (14, 16) between which a brake disk (18) is arranged, with the floating caliper being designed in such a manner that, upon a feed motion, it stores work as potential energy which is directed against said feed motion which, with the electric motor (20) being currentless, causes a resetting movement of the spindle (36) or the nut (42), respectively, as a kinetic energy to be released, so that the friction pad dears the brake disk (18).

15. The electromechanically actuatable disk brake according to one of the previous claims,
**characterised in that**
- in addition to the roller/spindle transmission arrangement, a further transmission stage, preferably in the form of a planetary transmission, is provided.

16. The electromechanically actuatable disk brake according to Claim 13,
**characterised in that**
- the torsion spring (80) protruding from the spindle (36) is operatively connected with a torque limiter (110) so that after a predetermined torsional motion of the torsion spring (80) in the feed direction of the vehicle brake, the torque required for a resetting movement against the feed motion can be reached and kept constant.

17. The electromechanically actuatable disk brake according to one of the previous claims,
**characterised in that**
- the spindle (36) is connected with a ring gear (112) secured against rotation to which a rotational movement can be imparted by means of bearing journals (94) of planetary gears (96) and which can be arrested by means of a ratchet (114).

18. The electromechanically actuatable disk brake according to Claim 17,
**characterised in that**
- the ratchet (114) can be operated by means of a bistable current impulse magnet (116) to which current is to be supplied for change-over only.

## Revendications

1. Frein à disque pouvant être actionné par voie électromécanique comportant
- un boîtier (12),
- une garniture de frein sur laquelle agit un actionneur pouvant être commandé électriquement,
- l'actionneur présentant un moteur électrique (20) et un dispositif de transmission à vis et écrou,
- le moteur électrique (20) étant conformé en tant que moteur à rotor intérieur muni d'un stator (22) et d'un rotor (26), dont le rotor (26) est solidaire en rotation, à la vis (36),
- la vis (36) étant couplée à l'écrou (42) de manière à pouvoir être entraînée afin de convertir un mouvement rotatif de la vis (36) en un mouvement de translation de l'écrou (42),
- la vis (36) étant supportée radialement le long de son extension Iongitudinale au moins en deux endroits de façon à pouvoir tourner par rapport au boîtier (12), et
- l'écrou (42) étant guidé de façon à coulisser axialement par rapport au boîtier (12), caractéristique en ce que
- la vis (36) est supportée à ses deux extrémités de façon à pouvoir tourner.

2. Frein à disque pouvant être actionné par voie électromécanique selon la revendication 1, **caractérisé en ce que**
- la vis (36) se trouve en liaison d'entraînement avec l'écrou (42) par l'intermédiaire de rouleaux planétaires.

3. Frein à disque pouvant être actionné par voie électromécanique selon la revendication 1 ou 2, **caractérisé en ce que** dans les sens axial par rapport au boîtier (12) un premier palier est configuré comme palier fixe et un deuxième palier comme palier libre.

4. Frein à disque pouvant être actionné par voie électromécanique selon la revendication 1, 2 ou 3, **caractérisé en ce que**
- l'écrou (42) est guidé dans un manchon lisse ou directement dans le boîtier (12) de façon à coulisser.

5. Frein à disque pouvant être actionné par voie électromécanique selon la revendication 1, 2, 3 ou 4, **caractérisé en ce qu'**un flasque de palier est prévu dans la zone de l'extrémité de la vis (36), qui est tournée vers la garniture de frein afin de former un appui pour la vis (36) et/ou un appui pour l'écrou (42).

6. Frein à disque pouvant être actionné par voie électromécanique **caractérisé en ce que**
- l'écrou (42) présente au moins un prolongement qui s'étend à travers une ouverture aménagée de façon correspondante, dans le flasque de palier et agit sur la garniture de frein.

7. Frein à disque pouvant être actionné par voie électromécanique selon la revendication 5 ou 6, **caractérisé en ce que** le deuxième palier pour la vis (36) est monté sur le flasque de palier et s'appuie contre le boîtier (12) par des saillies disposées entre les ouvertures pour les prolongements.

8. Frein à disque pouvant être actionné par voie selon la revendication 6 ou 7, **caractérisé en ce que**
- le prolongement ou chaque prolongement ainsi que l'ouverture respective sont conformés de façon que l'écrou (42) soit bloqué en rotation par rapport au boîtier (12).

9. Frein à disque pouvant être actionné par voie électromécanique selon l'une quelconque des revendications 1 à 8, **caractérisé en ce qu'**un élément intermédiaire est disposé entre la garniture de frein et le prolongement/les prolongements de l'écrou (42), ledit élément intermédiaire servant de pièce terminale pour le ou les prolongement(s) de l'écrou (42) et/ou à recevoir une garniture d'étanchéité.

10. Frein à disque pouvant être actionné par voie électromécanique selon la revendication 3, **caractérisé en ce que** l'extrémité de la vis (36) logée dans le palier libre est précontrainte dans le sens axial contre le boîtier (12) par un dispositif à ressort.

11. Frein à disque pouvant être actionné par voie électromécanique selon l'une quelconque des revendications 1 à 10, **caractérisé en ce que**
- la vis (36) est couplée à un accumulateur à ressort (80) qui lors d'un mouvement d'approche absorbe un travail dirigé à l'encontre de ce mouvement d'approche, lequel en cas d'absence de courant dans le moteur électrique (20) provoque un mouvement de rappel de la vis (36) ou de l'écrou (42) de sorte que la garniture de frein peut se libérer d'un disque de frein(18).

12. Frein à disque pouvant être actionné par voie électromécanique selon la revendication 11, **caractérisé en ce que** l'accumulateur à ressort est disposé par rapport à la vis (36), au moteur et au boîtier (12) de sorte que l'opération de charge et de décharge de l'accumulateur à ressort puisse être commandée au moyen d'un accouplement couplé à l'accumulateur à ressort.

13. Frein à disque pouvant être actionné par voie électromécanique selon la revendication 11 ou 12 **caractérisé en ce que**
- l'accumulateur à ressort est formé d'un ressort de torsion (80) qui est disposé sans un espace creux à l'intérieur de la vis (36).

14. Frein à disque pouvant être actionné par voie électromécanique selon la revendication 1 à 10, **caractérisé en ce qu'**un étrier flottant (10) porte deux garnitures de frein (14, 16) entre lesquelles un disque de frein (18) est disposé, l'étrier flottant étant conformé de façon à accumuler lors d'un mouvement d'approche un travail dirigé à l'encontre de ce mouvement d'approche en tant qu'énergie potentielle laquelle provoque, en l'absence de courant dans le moteur électrique (20), un mouvement de rappel de la vis (36) ou de l'écrou (42) en tant qu'énergie cinétique à libérer, de sorte que la garniture de frein se libère du disque de frein (18).

15. Frein à disque pouvant être actionné par voie électromécanique selon l'une quelconque des revendications précédentes, **caractérisé en ce qu'**outre le dispositif de transmission à vis et à rouleaux un autre étage de transmission est prévu, de préférence sous forme d'une transmission planétaire.

16. Frein à disque pouvant être actionné par voie électromécanique **caractérisé en ce que**
- à une extrémité dépassant la vis (36), le ressort de torsion (80) est solidaire d'un limiteur de couple de rotation (110) de sorte qu'après un mouvement de torsion prédéterminé du ressort de torsion (80) dans la direction d'approche du frein de véhicule le couple de rotation nécessaire à un mouvement de rappel dirigé à l'encontre du mouvement d'approche peut être obtenu et maintenu constant.

17. Frein à disque pouvant être actionné par voie électromécanique selon l'une des revendications précédentes, **caractérisé en ce que**
- la vis (36) est solidaire en rotation d'une couronne dentée (112) qui peut être entraînée en rotation au moyen de tourillons (94) par des roues planétaires (96) et peut être bloquée au moyen d'un cliquet d'arrêt(114).

18. Frein à disque pouvant être actionné par voie électromécanique selon la revendication 17, **caractérisé en ce que**
- le cliquet d'arrêt (114) peut être actionné au moyen d'un aimant bistable à impulsions de courant (116), qui ne doit être alimenté en courant que pour la commutation.
